# EUROPEAN PATENT SPECIFICATION

(11) **EP 1 407 934 B1**
(45) Date of publication and mention of the grant of the patent: **15.11.2006**
(21) Application number: 02021904.4
(22) Date of filing: 27.09.2002
(51) Int. Cl.: B60R 11/02

(54) **Sound system for a vehicle**
Soundsystem für ein Fahrzeug
Système sonore pour véhicule

(43) Date of publication of application: 14.04.2004
(73) Proprietor: Harman Becker Automotive Systems GmbH, 76307 Karlsbad (DE)
(72) Inventor: Leipold, Kurt, 94351 Feldkirchen (DE)
(74) Representative: Schmuckermaier, Bernhard

(56) References cited:
- EP-A- 0 904 985
- DE-A- 19 909 143
- DE-C- 4 439 461
- FR-A- 2 780 010

## Description

### Background of the invention

The invention relates to a vehicle sound system having a low-frequency loudspeaker.

One problem when installing low-frequency loudspeakers in motor vehicles is that low-frequency loudspeakers require a large resonant volume but that there is generally only little space for a large resonant volume in motor vehicles. Moreover, locations with large resonant volumes are often not suitable for the installation of low-frequency loudspeakers since the low-frequency loudspeakers require a large, substantially flat surface for installation. In a motor vehicle, there are few locations that offer both a large flat surface'for the mounting of the loudspeaker, on the one hand, and a large resonant volume, on the other hand.

FR-A-2780010 discloses a low-frequency loudspeaker arranged in a location where enough resonant volume is available and being coupled to a vehicle ventilation system in order to direct the sound generated by the loudspeaker to a desired location.

DE 4413626, for example, has disclosed mounting a loudspeaker in various ways under the vehicle headliner. Although the available area is very large, the installation depth and hence also the resonant volume between the headliner and the roof is very small, thus allowing, at best, only very shallow low-frequency loudspeakers to be installed. Moreover, the resonant volume is not sufficient in most cases.

DE 4439461 has disclosed accommodating loudspeakers in side doors of passenger cars. Although the doors of motor vehicles provide flat surfaces which are very suitable for mounting loudspeakers, the volume enclosed by the doors is severely restricted by the window-lifting mechanism and, when the window is retracted, also by the window itself, with the result that this volume is generally not sufficient for a low-frequency loudspeaker.

EP 0904985 has disclosed an arrangement in which the low-frequency loudspeaker is fitted under a vehicle seat, the resonant volume of the low-frequency loudspeaker being formed at least partially by the sill volume enclosed by a support frame. In this arrangement, the loudspeaker is situated in a relatively small loudspeaker box under the vehicle seat. The resonant volume of the low-frequency loudspeaker is formed by the volume in the box and the acoustically coupled volume in a support frame of the vehicle. Acoustic coupling is accomplished by means of a through opening in the support frame and in the box.

The volume in the support frame is furthermore connected to the surrounding area by diffusion openings, the external volume of the surrounding area thus being added to the volume in the box and to the volume in the support frame. Since the external volume, in particular, is unlimited, the low-frequency loudspeaker can operate with an unlimited resonant volume, this being very advantageous, especially in the case of low-frequency sounds.

With this arrangement, however, the space for the installation of a low-frequency loudspeaker is extremely small since the loudspeaker is supposed to be covered by the seat in all the positions of the seat. Moreover, there is also supposed to be a certain space available under the seat in many cases to ensure that passengers on seat in many cases to ensure that passengers on the rear seats have sufficient foot room. Loudspeakers with a large diaphragm surface, which is advantageous for good reproduction of low-frequency sound, can therefore be arranged only with difficulty under a vehicle seat.

It is thus an object of the invention to specify a sound system for a vehicle which, on the one hand, allows easy installation and, on the other hand, offers a sufficient resonant volume.

### Summary of the invention

The invention eliminates the problems known from the prior art by virtue of the fact that the resonant volume of the low-frequency loudspeaker, at least when the door is closed, is formed, on the one hand, by a first cavity situated in the door and, on the other hand, by a cavity coupled to the first cavity by a coupling device and situated outside the door. A largely closed volume surrounded by a rigid wall is preferably used as a cavity. Thus the first cavity can be a volume enclosed by the door frame, the exterior panel and/or the interior lining of the door, for example. The nature of the coupling device between the first and the second cavity is such that it allows adequate pressure compensation and exchange of air between the two cavities. Any desired volume of virtually any desired shape, preferably situated in the vicinity of the door, can be used as a second cavity, although the volume should, of course, be sufficiently large.

The first and second cavity can each have an opening, which correspond to one another in such a way that they come to rest against one another when the door is closed. The opening of the second cavity can be arranged at any desired point in the door as long as there is another part of the vehicle with a point suitable for the introduction of the second opening opposite the opening in the first cavity. These can be all the narrow sides of the door, for example.

To achieve sealed coupling between the two openings, at least one of the two openings can be provided with a sealing lip, which is pressed against the rim of the other opening or - where present - against another sealing lip when the door is closed.

To prevent penetration by relatively large particles when the door is open, at least one of the two openings can be provided over the entire cross-sectional area with an acoustically neutral cover that is permeable to air. Preferably, the opening belonging to the cavity containing the low-frequency loudspeaker is covered in order to prevent penetration by small stones, relatively large dirt particles and the like, for example.

The two cavities may be coupled to one another by means of a telescopic tube connection. In the simplest case, this may be formed by two nested tubes, which can be displaced one inside the other and remain nested one inside the other even when the door is open. When the door is closed, the tubes are pushed further or completely into one another. Depending on their mounting, the tubes can be straight or bent in accordance with the motion of the door. The tubes can also be of different lengths, it being possible for the shorter tube to act as a guide for the longer tube and the longer tube to be pushed into one of the cavities.

At least one of the tubes can be of flexible design and/or can be connected in an articulated manner to one of the two cavities. A flexible sleeve is preferably provided as the articulated joint.

A bellows may be provided as a coupling device. The bellows may connect the two openings in the cavities and thereby may effect coupling of the two cavities. A bellows adapts easily to the different positions of the door. The bellows preferably has a round cross section but can also have any other cross section that might be imagined. It is preferably made of a relatively rigid material, such as plastic.

A flexible hose, which connects the two openings in the cavities may further be provided as a coupling element. The hose is preferably thick-walled in order to form a rigid enclosing wall with regard to sound transmission. For coupling, it can be employed in a wound, spiral or similar arrangement.

The low-frequency loudspeaker may be surrounded by a box defining the first or second cavity. In this way, it is possible to define a clearly delimited volume directly adjoining the loudspeaker. Further, it is thereby possible to protect the loudspeaker against soiling and/or penetrating moisture from the rear as well if installing it in the side door, for example.

It is furthermore possible, in the case of at least one of the cavities, to provide diffusion openings that connect at least one of the two cavities to the exterior of the resonant volume, e.g. the volume surrounding the vehicle. Since the exterior volume is unlimited, the loudspeaker can operate with an unlimited resonant volume. A large resonant volume is advantageous for good reproduction of low-frequency sound.

The second cavity is preferably formed at least partially by hollow parts of the support frame of the motor vehicle. Suitable parts of this kind are, for example, the A-pillar, the B-pillar, the C-pillar, roof-support elements and/or the sill of the vehicle. In addition or as an alternative, the second cavity can also be formed by a volume surrounded by bodywork parts of the vehicle, e.g. a volume formed by the side walls of the footwell or parts of the vehicle roof in conjunction with the vehicle headliner.

The loudspeaker is preferably installed either in the door or in the bodywork, e.g. the side walls of the footwell. The other volume in each case, i.e. the bodywork parts or the door, then form the additional resonant volume in the form of the second cavity.

Finally, the first and/or the second cavity is/are coupled to further cavities situated outside the door by further coupling devices. In this way, it is possible, for example, to couple a plurality of relatively small volumes to the first cavity via the support frame, thus giving overall a large resonant volume that is advantageous for the low-frequency loudspeaker.

### Brief description of the drawings

The invention will now be explained in more detail with reference to exemplary embodiments illustrated in the drawing, in which
- Figure 1: shows schematically a vehicle door and the frame parts surrounding it, with various options for the implementation of a sound system according to the invention;
- Figure 2: shows another option for the implementation of a sound system according to the invention;
- Figure 3: shows a horizontal section through the vehicle door and the frame part to illustrate the transition from the door volume to the support frame volume, with the door open;
- Figure 4: shows the arrangement in accordance with Figure 3 with the door closed;
- Figure 5: shows a modification of the exemplary embodiment in accordance with Figure 3 with a telescopic joint, with the door open;
- Figure 6: shows the arrangement in accordance with Figure 5 with the door closed;
- Figure 7: shows an alternative embodiment to the embodiment in accordance with Figure 3 with a lipseal transition, with the door open;
- Figure 8: shows the arrangement in accordance with Figure 7 with the door closed;
- Figure 9: shows a vertical section through the transition between the vehicle door, on the one hand, and the supporting frame, on the other hand, accomplished by means of a wound flexible hose;
- Figure 10: shows the principle of the flexible hose applied in the arrangement in accordance with Figure 9;
- Figure 11: shows an alternative embodiment to the embodiment in accordance with Figure 9 with a spiral hose; and
- Figure 12: shows schematically the principle of the spiral hose as the door is opened and closed.

### Detailed description

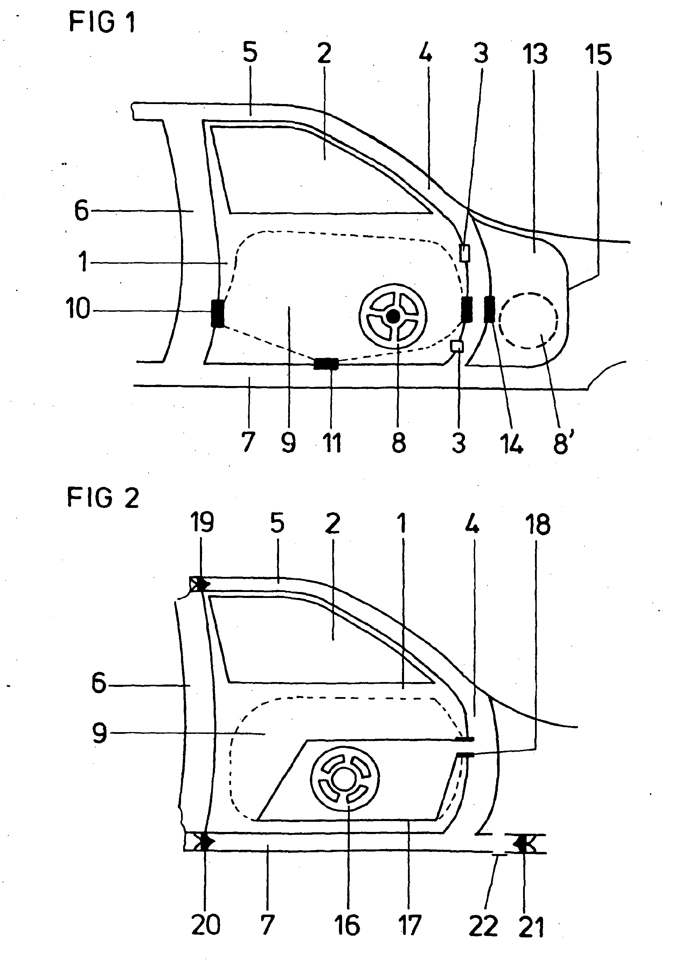

In the case of the exemplary embodiment in accordance with Figure 1, this illustrates a door 1, which is installed in a vehicle, has a window 2 and is connected in an articulated manner by hinges 3 to the A-pillar 4 of the vehicle. As well as being framed by the A-pillar, the door 1 is framed on the remaining narrow edges by a roof support 5, a B-pillar 6 and a sill 7. When closed, the door 1 is therefore in sealing contact with the roof support 5 on its upper side, with the B-pillar 6 on its side opposite the hinges 3 and with the sill 7 on its underside. Installed in the door 1, underneath the window 2, is a loudspeaker 8, which uses the cavity enclosed by the door 1 underneath the window 2 as a resonant volume. However, the loudspeaker 8 must share this volume with a window-lifting mechanism (not shown), for example, with the result that the volume in the door 1 is generally not sufficient for the loudspeaker 8.

According to the invention, this volume is now enlarged by virtue of the fact that further volumes, that is to say further cavities'already available in the vehicle, are coupled to the volume present in the door 1. In the exemplary embodiment, the door volume 9 is coupled to the further volumes by coupling devices 10, 11 and 12.

Thus, the (effective) door volume 9 is coupled to the volume of the B-pillar 6 by coupling device 10, to the volume present in the sill 7 by coupling device 11, and to the volume that occurs in the A-pillar 4 by coupling device 12. Examples of coupling devices of this kind will be described below.

However, the distinguishing feature of the coupling devices 10, 11 and 12 is that a largely unhindered exchange of air can take place between the individual volumes. In this arrangement, the individual additional volumes can be self-contained or, alternatively, connected to one another, as in the exemplary embodiment in accordance with Figure 1. In the exemplary embodiment under consideration, the effective door volume 9 thus forms a first volume, which is connected to a second volume defined by the A-pillar 4, the B-pillar 6, the roof support 5 and the sill 7. As already mentioned, however, the A-pillar 4, B-pillar 6, roof support 5 and sill 7 could form independent individual volumes, which would each be coupled independently to the effective volume 9. Thus a first volume would be coupled to a plurality of additional individual volumes.

However, the single additional volume (second volume) present in the exemplary embodiment under consideration can, for its part, be coupled to an additional volume 13 by a coupling device'14. The volume 13 is a cavity enclosed by the A-pillar 4 and by bodywork parts 15, of the type that occurs under the side walls of the driver's and front seat passenger's footwell, for example.

As an alternative, the loudspeaker 8 can also be mounted in a corresponding position 8' in volume 13, on the outer parts 15. As a further alternative, a loudspeaker 8' additional to loudspeaker 8 could be employed in this position.

The exemplary embodiment in accordance with Figure 2 is a modification of the exemplary embodiment shown in Figure 1 such that, assuming the door 1 shown in Figure 1, which is surrounded by the A-pillar 4, the roof support 5, the B-pillar 6 and the sill 7, a loudspeaker 16 is now mounted at a somewhat different point. Although the loudspeaker is likewise situated within the effective door volume 9, it is, for its part, installed in a box 17 that encloses it hermetically on the rear side. The advantage of the box 17 is that the resonant volume for the loudspeaker 16 is precisely defined, something that is not the case or not always the case with the effective door volume 9. Thus, the volume without a box 17 can change as the window is raised and lowered, for example. Another advantage with the box 17 is that, apart from intended sound openings, it can be made completely airtight, something that cannot always be guaranteed with the hypothetical door volume 9.

However, the volume in the box 17 is generally not sufficient for good bass reproduction and is therefore coupled by a coupling device 18 to the cavity enclosed by the A-pillar and hence to its volume. The volume in the A-pillar 4, for its part, merges into the volume of the roof support 5, on the one hand, and into the volume of the sill 7, on the other hand. In order to clearly define the volume in the support frame as well, sealing plugs 19 and 20 are inserted into the roof support 5 and the sill 7 at the level of the B-pillar 6, a further sealing plug 21 being provided at the transition between the sill 7 and the A-pillar 4 to ensure sealing relative to other parts of the support frame.

To enlarge the resonant volume of the loudspeaker 16 even further, the exterior of the vehicle is coupled in by means of a diffusion opening 22. Since the external volume is unlimited, the loudspeaker can operate with an unlimited resonant volume, significantly improving bass reproduction. The loudspeaker 16 radiates sound exclusively towards the front, i.e. into the vehicle interior, since the loudspeaker 16 is acoustically insulated from the entire support frame, at least with respect to high frequencies. As a result, acoustic coupling of the support frame to the loudspeaker 16, i.e. excitation of the support frame by the loudspeaker, is prevented.

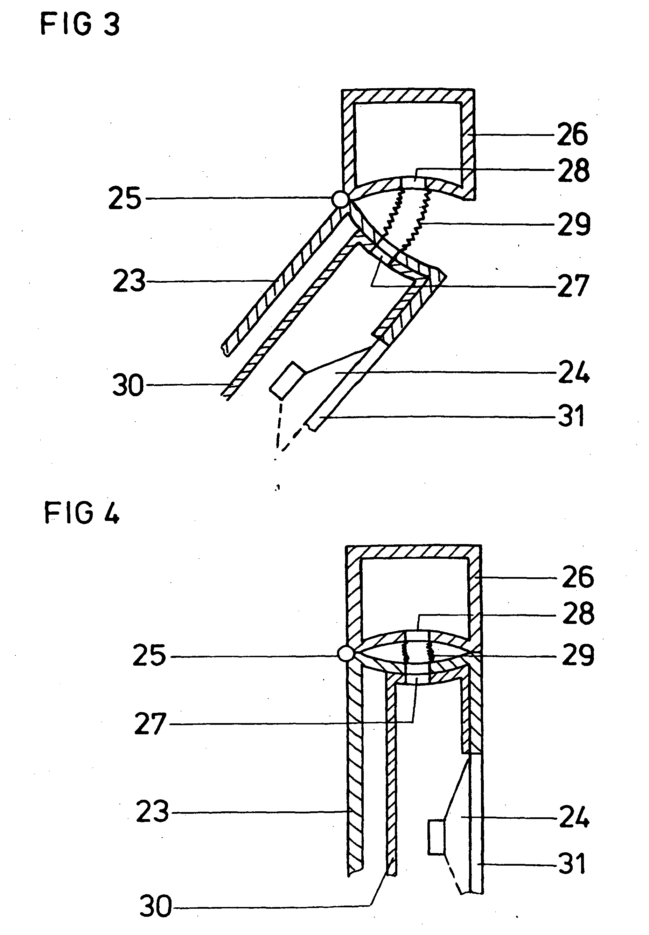

The coupling device 18 for coupling the box 17 to the support frame in accordance with Figure 2 and, for example, the coupling device 12 from Figure 1 can be embodied like the exemplary embodiments of coupling devices shown in Figures 3 to 12.

In the case of the exemplary embodiment of a coupling device shown in Figure 3, a door 23, in the cavity of which a loudspeaker 24 is mounted, is attached to a support-frame part 26 (e.g. an A-pillar) in an articulated manner by means of a hinge 25. The support-frame part 26 and the door 23 curve inwards on their mutually opposite sides, with the result that, in the closed state (see Figure 4), they themselves enclose a cavity of oval cross section, which does not act as a resonant volume. (At least one) opening 27 and 28 is formed in each of the two mutually facing surfaces of the door 23 and the support-frame part 26.

One end of a beam 29 is secured in a sealing manner in each of the two openings 27 and 28, giving a sealed joint between the cavity enclosed by the door 23 and the cavity enclosed by the support-frame part 26. Figure 3 also shows, in chain-dotted lines, parts of a box 30 enclosing the loudspeaker 24. The use of the box 30 is optional and it has been omitted in the subsequent exemplary embodiments for the sake of clarity, but it can be employed in these in the same manner as in Figure 3.

Also clearly visible from Figure 3 is the way in which the loudspeaker 24 radiates into the vehicle interior (not shown specifically) through a front opening 31 situated in the door, while a first resonant volume is formed on its rear side by the box 30. A second resonant volume, which is defined by the support-frame part 26, is coupled to the first resonant volume by means of the bellows 29.

Figure 4 illustrates the arrangement in accordance with Figure 3 with the door 23 closed. Here, the bellows 29 is enclosed in the cavity formed by the curved mutually facing sides of the door 23 and of the support-frame part 26 when compressed. As can be seen from a comparison of Figures 3 and 4, the difference between the change in volume between the extended bellows 29 and the compressed bellows 29 in comparison with the total resonant volume, i.e. the volume of the box 30 and the volume defined by the support part 26, is so small in total that it is negligible and hence there is no change in the acoustic properties of the overall system due to a change in resonant volume.

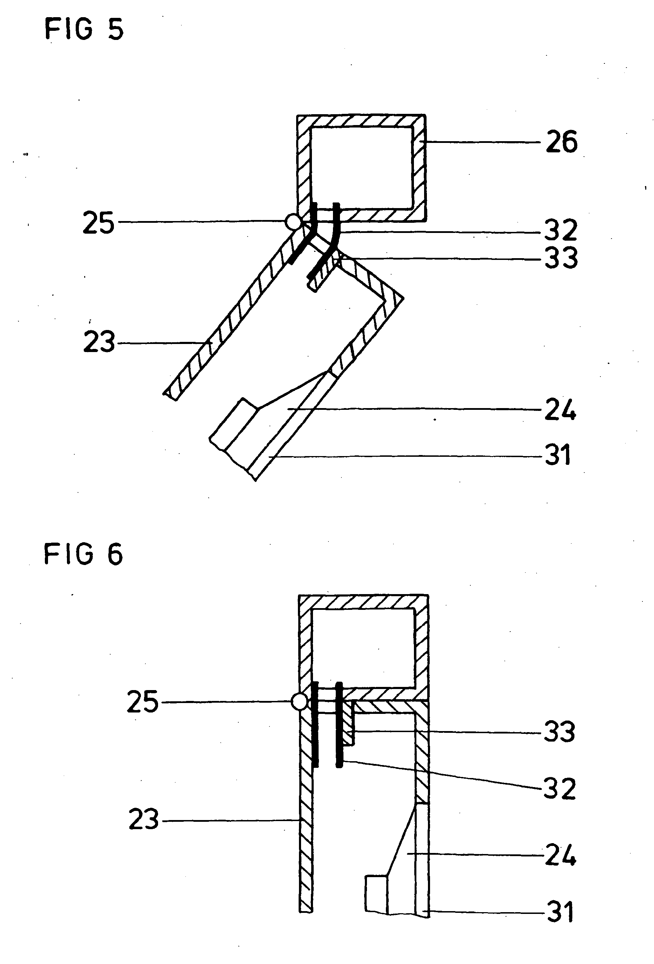

A modification of the exemplary embodiment shown in Figure 3 is illustrated in greater detail in Figure 5. The support-frame part 26 and the door 23 are of flat design on the mutually opposite sides, in contrast to Figure 3, but can have any desired shape. The openings in the support-frame part 26 and in the door 23 for coupling the two volumes are arranged in the vicinity of the hinge 25 in order to minimize the difference in spacing between the support-frame part 26 and the door 23 when the door 23 is open and when it is closed. Here, the coupling device comprises two telescopically nested tubes 32 and 33, of which the tube 32 with the somewhat smaller cross section is connected firmly at one end to the openings situated in the support-frame part 26 and extends away from the support-frame part 26 in the direction of the door 23. The tube 33 of larger diameter also extends in the same direction, tube 32 being inserted into tube 33 and being displaceable in the latter.

As the door is open and closed, tube 32 is displaced in a corresponding manner in tube 33. Since there is no resulting linear motion, owing to the rotatably hinged mounting by means of hinge 25, but a motion along a circular segment, it is necessary to support at least one of the two tubes in a self-articulated manner or, preferably - as shown in the exemplary embodiment - to make at least one of the two tubes flexible. In the exemplary embodiment under consideration, tube 32 is of flexible design. However, both tubes could be flexible in the same way or, alternatively, tube 33 only. As already mentioned, however, both tubes could also be rigid, in which case both could be supported in the respective opening by means of a rubber sleeve, for example.

In the case of the exemplary embodiment under consideration, part of tube 33 is furthermore formed by the side wall of the door 23, with the result that both tubes 32, 33 are positioned as close as possible to the hinge 25. In the present case, a rubber hose is provided as a flexible tube 32, this on the one hand having good flexibility transversely to its longitudinal axis but, on the other hand, having sufficient rigidity in the direction of its longitudinal axis to be pushed into tube 33.

In this regard, Figure 6 shows the arrangement in accordance with Figure 5 when the door is closed. In this case, the rubber hose used as a tube 32 is pushed into tube 33 largely in a straight line. The use of a rubber hose furthermore has the advantage that the two tubes 32 and 33 are to a large extent sealed off relative to one another owing to the sealing properties of rubber, with the result that there is no need for additional sealing measures (e.g. ring seals) in this configuration. To provide better sliding properties and, in addition, further enhance the sealing effect, the rubber hose provided as tube 32 and/or tube 33 can be treated with a lubricant (e.g. lubricating grease). As can be seen from Figures 5 and 6, a sealed joint between the volume enclosed by the support-frame part 26 and the volume enclosed by the door 23 is possible in every state of the door.

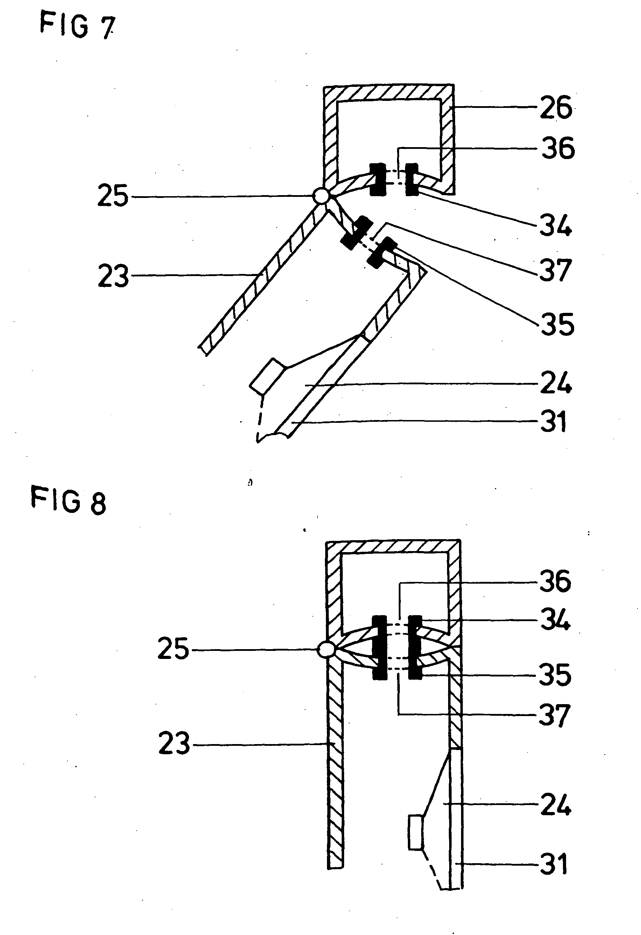

Another development of the exemplary embodiment in accordance with Figure 3 is shown in Figure 7. In this exemplary embodiment, the coupling between the cavity enclosed by the support-frame part 26 and the cavity enclosed by the door 23 is such that it is effective only when the door is closed. When the door is open, the two cavities are connected to the environment. In the closed state, two rubber sleeves 34 and 35, which are secured in openings situated in the mutually facing ends of the support-frame part 26 and of the door 23, are pressed against one another. Figure 8 shows the situation when the door 23 is closed. To prevent penetration by relatively large dirt particles, dust or the like, both openings in the present case are covered by a special cover 36 and 37 respectively, which are permeable to air and, for example, are formed by a fine-mesh grill or a gauze.

The embodiment shown in Figures 7 and 8 can also be used in a slightly modified form for the coupling pieces 10 and 11 in Figure 1. In this case, two sealing lips corresponding to the sealing lips 36 and 37 would then not be pressed against one another by a tilting movement but would initially be moved relative to the door 1 by means of a mutually parallel displacement of the sill 7 or of the B-pillar 6, for example. In the closed state, the lips would then be one above the other again and would press against one another through their own elasticity, for example.

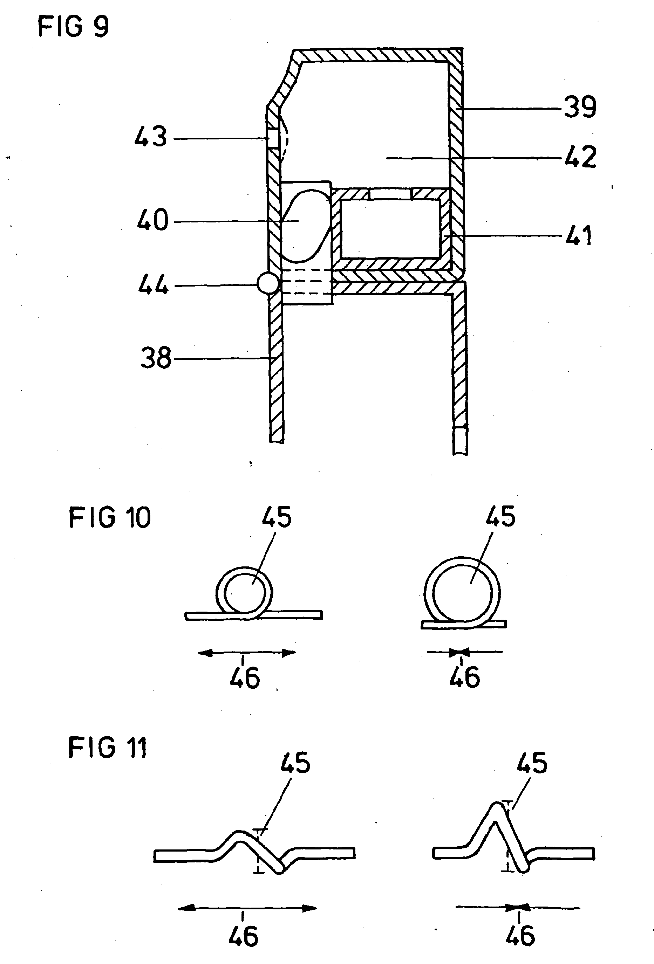

Figure 9 shows another embodiment of the invention, a cavity enclosed by a door 38 being coupled to a cavity enclosed by bodywork parts 39. Coupling is accomplished by means of a wound hose 40. The connection between the two cavities is arranged in the vicinity of a hinge 40 which secures the door 38 in an articulated manner on the bodywork parts 39. The hose 40 leads past a support-frame part 41 which, for its part, encloses a cavity. This cavity is coupled to the cavity enclosed by the bodywork parts 39 via an opening 42.

Moreover, the cavity enclosed by the bodywork parts 39 is connected to the surrounding area by a diffusion opening 43. However, if necessary, bass-reflex openings etc can be employed instead of a diffusion opening. In the exemplary embodiment under consideration, the wound hose has only one turn, the cross section of which decreases during a longitudinal motion, as illustrated in Figure 10, but increases in cross section 45 during a longitudinal compression. If the door is closed, as illustrated in Figure 9, the hose 40 lies largely in a cavity formed between the bodywork parts 39 and the support-frame part 41. When the door is opened, the hose is then pulled out of this cavity, reducing the cross section of the turn.

If the cavity provided to accommodate the hose 40 is sufficiently large, it is also possible for a coil-shaped spiral to be provided instead of a loop-shaped turn (as illustrated in Figure 10), this spiral responding to extension in the longitudinal direction in a manner comparable to a spiral spring. The behaviour of a hose 40 wound in this way is illustrated in Figure 11 in the case of extension and in the case of compression.

## Claims

1. Sound system for a vehicle;
said vehicle having at least one door (1),
said sound system comprising a low-frequency loudspeaker (8, 16, 24) having a resonant volume (9), **characterised in that** said resonant volume (9) being formed, at least when the door (1) is closed, by a first cavity (9) situated inside of said door (1) and by a second cavity (4, 5, 6, 7) situated outside of said door (1),
said second cavity (4, 5, 6, 7, 13) being coupled to said first cavity (9) by a coupling means (12, 14, 18, 28, 29, 32, 33, 34, 35, 36, 37, 40, 45).

2. Sound system according to Claim 1, in which said coupling means (34, 35, 36, 37) comprises a first opening (37) in the first cavity and a second opening (36) in the second cavity, said first and second openings being arranged in close proximity to each other when said door (1) is closed.

3. Sound system according to Claim 2, in which at least one of the two openings (36, 37) is provided with a sealing lip (34, 35), which is compressed when the door (1) is closed and seals off the coupling of the two cavities from the outside.

4. Sound system according to Claim 2 or 3, in which at least one of the two openings (36, 37) is provided over the cross-sectional area with an acoustically neutral cover that is permeable to air.

5. Sound system according to Claim 1, in which the two cavities are coupled to one another by means of a telescopic tube (32, 33) connection.

6. Sound system according to Claim 5, in which the telescopic tube connection has two tubes (32, 33), which can be displaced one inside the other and engage in openings of the cavities.

7. Sound system according to Claim 5 or 6, in which at least one of the tubes (32) is connected in an articulated manner to one of the two cavities.

8. Sound system according to Claim 7, in which an at least partially flexible tube (32) is provided for the articulated connection.

9. Sound system according to Claim 1, in which the two cavities are coupled to one another by means of a bellows (29), which connects two openings (27, 28) in the cavities.

10. Sound system according to Claim 1, in which the two cavities are coupled to one another by means of a flexible hose (40), which connects two openings in the cavities.

11. Sound system according to one of the previous claims, in which the low-frequency loudspeaker (16) is surrounded by a box (17) defining the first or second cavity.

12. Sound system according to one of the preceding claims, in which one of the cavities (4) is open to the outside of the resonant volume (9) via diffusion openings (22, 43).

13. Sound system according to one of the preceding claims, in which the second cavity includes a volume defined at least by hollow parts (4, 5, 6, 7) of the support frame of the vehicle.

14. Sound system according to Claim 13, in which the parts of the support frame include an A-pillar (4) of the vehicle.

15. Sound system according to Claim 13, in which the parts of the support frame include a B-pillar (6) of the vehicle.

16. Sound system according to Claim 13, in which the parts of the support frame include a sill (7) of the vehicle.

17. Sound system according to one of the preceding claims, in which the second cavity includes a volume surrounded by bodywork parts (13) of the vehicle.

18. Sound system according to Claim 17, in which the low-frequency loudspeaker (8) is installed in the bodywork parts (13).

19. Sound system according to one of Claims 1 to 17; in which the low-frequency loudspeaker (8, 16) is arranged in the door (1) .

20. Sound system according to one of the preceding claims, in which the first and/or the second cavity is/are coupled to further cavities situated outside the door (1) by further coupling devices.

## Patentansprüche

1. Soundsystem für ein Fahrzeug, wobei das Fahrzeug mindestens eine Tür (1) hat, wobei das Soundsystem einen Tieftonlautsprecher (8, 16, 24) mit einem Resonanzvolumen (9) umfasst, **dadurch gekennzeichnet, dass** das Resonanzvolumen (9), mindestens bei geschlossener Tür (1), durch einen ersten Hohlraum (9), der sich im Innern der Tür (1) befindet, und durch einen zweiten Hohlraum (4, 5, 6, 7), der sich außerhalb der Tür (1) befindet, gebildet ist, wobei der zweite Hohlraum (4, 5, 6, 7, 13) mittels eines Kopplungsmittels (12, 14, 18, 28, 29, 32, 33, 34, 35, 36, 37, 40, 45) mit dem ersten Hohlraum (9) gekoppelt ist.

2. Soundsystem nach Anspruch 1, bei dem das Kopplungsmittel (34, 35, 36, 37) eine erste Öffnung (37) im ersten Hohlraum und eine zweite Öffnung (36) im zweiten Hohlraum umfasst, wobei die erste Öffnung und die zweite Öffnung bei geschlossener Tür (1) nahe beieinander vorgesehen sind.

3. Soundsystem nach Anspruch 2, bei dem mindestens eine der beiden Öffnungen (36, 37) mit einer Dichtungslippe (34, 35) ausgestattet ist, die bei geschlossener Tür (1) zusammengedrückt wird und die Kopplung der beiden Hohlräume zur Umgebung hin abdichtet.

4. Soundsystem nach Anspruch 2 oder 3, bei dem mindestens eine der beiden Öffnungen (36, 37) mit einer über die Querschnittsfläche verlaufenden akustisch neutralen Abdeckung ausgestattet ist, die luftdurchlässig ist.

5. Soundsystem nach Anspruch 1, bei dem die beiden Hohlräume mittels einer durch ein Teleskoprohr (32, 33) erfolgenden Verbindung miteinander gekoppelt sind.

6. Soundsystem nach Anspruch 5, bei dem die Teleskoprohrverbindung zwei Rohre (32, 33) aufweist, die ineinanderliegend verschoben werden können und in Öffnungen der Hohlräume eingreifen.

7. Soundsystem nach Anspruch 5 oder 6, bei dem mindestens eines der Rohre (32) in einer gelenkigen Weise mit einem der beiden Hohlräume verbunden ist.

8. Soundsystem nach Anspruch 7, bei dem ein mindestens teilweise flexibles Rohr (32) für die Gelenkverbindung vorgesehen ist.

9. Soundsystem nach Anspruch 1, bei dem die beiden Hohlräume mittels eines Balgs (29), der die beiden Öffnungen (27, 28) in den Hohlräumen verbindet, miteinander gekoppelt sind.

10. Soundsystem nach Anspruch 1, bei dem die beiden Hohlräume mittels eines flexiblen Schlauchs (40), der zwei Öffnungen in den Hohlräumen verbindet, miteinander gekoppelt sind.

11. Soundsystem nach einem der vorstehend aufgeführten Ansprüche, bei dem der Tieftonlautsprecher (16) von einer den ersten oder den zweiten Hohlraum definierenden Box (17) umgeben ist.

12. Soundsystem nach einem der vorstehend aufgeführten Ansprüche, bei dem einer der Hohlräume (4) über Diffusionsöffnungen (22, 43) zum Äußeren des Resonanzvolumens (9) hin offen ist.

13. Soundsystem nach einem der vorstehend aufgeführten Ansprüche, bei dem der zweite Hohlraum ein Volumen beinhaltet, das mindestens durch hohle Teile (4, 5, 6, 7) des Stützrahmens des Fahrzeugs definiert ist.

14. Soundsystem nach Anspruch 13, bei dem die Teile des Stützrahmens eine A-Säule (4) des Fahrzeugs beinhalten.

15. Soundsystem nach Anspruch 13, bei dem die Teile des Stützrahmens eine B-Säule (6) des Fahrzeugs beinhalten.

16. Soundsystem nach Anspruch 13, bei dem die Teile des Stützrahmens einen Schweller (7) des Fahrzeugs beinhalten.

17. Soundsystem nach einem der vorstehend aufgeführten Ansprüche, bei dem der zweite Hohlraum ein von Karosserieteilen (13) des Fahrzeugs umgebenes Volumen beinhaltet.

18. Soundsystem nach Anspruch 17, bei dem der Tieftonlautsprecher (8) in den Karosserieteilen (13) eingebaut ist.

19. Soundsystem nach einem der Ansprüche 1 bis 17, bei dem der Tieftonlautsprecher (8, 16) in der Tür (1) vorgesehen ist.

20. Soundsystem nach einem der vorstehend aufgeführten Ansprüche, bei dem der erste und/oder der zweite Hohlraum durch weitere Kopplungsvorrichtungen mit weiteren außerhalb der Tür (1) befindlichen Hohlräumen gekoppelt ist bzw. sind.

## Revendications

1. Système audio pour un véhicule ;
ledit véhicule comportant au moins une portière (1),
ledit système audio comprenant un haut-parleur basse fréquence (8, 16, 24) ayant un volume résonant (9), **caractérisé en ce que** ledit volume résonant (9) est réalisé, au moins lorsque la portière (1) est fermée, par une première cavité (9) située à l'intérieur de ladite portière (1) et par une deuxième cavité (4, 5, 6, 7) située à l'extérieur de ladite portière (1),
ladite deuxième cavité (4, 5, 6, 7, 13) étant accouplée à ladite première cavité (9) par des moyens de liaison (12, 14, 18, 28, 29, 32, 33, 34, 35, 36, 37, 40, 45).

2. Système audio selon la revendication 1, dans lequel lesdits moyens de liaison (34, 35, 36, 37) comprennent une première ouverture (37) ménagée dans la première cavité et une deuxième ouverture (36) ménagée dans la deuxième cavité, lesdites première et deuxième ouvertures étant disposées très proches l'une de l'autre lorsque ladite portière (1) est fermée.

3. Système audio selon la revendication 2, dans lequel au moins une des deux ouvertures (36, 37) est munie d'une lèvre d'étanchéité (34, 35) qui est mise en compression lorsque la portière (1) est fermée et qui isole vis à vis de l'extérieur la liaison entre les deux cavités.

4. Système audio selon la revendication 2 ou 3, dans lequel au moins une des deux ouvertures (36, 37) est munie, au-dessus de sa section transversale, d'un couvercle neutre sur le plan acoustique, qui est perméable à l'air.

5. Système audio selon la revendication 1, dans lequel les deux cavités sont accouplées l'une à l'autre au moyen d'une liaison se présentant sous la forme d'un tube télescopique (32, 33).

6. Système audio selon la revendication 5, dans lequel la liaison en forme de tube télescopique se compose de deux tubes (32, 33), qui peuvent être déplacés l'un dans l'autre et qui viennent en prise d'engagement dans les ouvertures des cavités.

7. Système audio selon la revendication 5 ou 6, dans lequel au moins un des tubes (32) est raccordé selon une disposition articulée à l'une des deux cavités.

8. Système audio selon la revendication 7, dans lequel un tube flexible, au moins en partie, (32) est prévu pour la liaison articulée.

9. Système audio selon la revendication 1, dans lequel les deux cavités sont accouplées l'une à l'autre au moyen d'un soufflet (29) qui raccorde deux ouvertures (27, 28) ménagées dans les cavités.

10. Système audio selon la revendication 1, dans lequel les deux cavités sont accouplées l'une à l'autre au moyen d'un tuyau flexible (40), qui raccorde deux ouvertures ménagées dans les cavités.

11. Système audio selon l'une des revendications qui précèdent, dans lequel le haut-parleur basse fréquence (16) est entouré par une enceinte (17) définissant la première ou la deuxième cavité.

12. Système audio selon l'une des revendications précédentes, dans lequel l'une des cavités (4) est ouverte vers l'extérieur du volume résonant (9) par l'intermédiaire d'ouvertures diffusantes (22, 43).

13. Système audio selon l'une des revendications précédentes, dans lequel la deuxième cavité comprend un volume constitué au moins par des parties creuses (4, 5, 6, 7) du châssis support du véhicule.

14. Système audio selon la revendication 13, dans lequel les parties du châssis support du véhicule comprennent un montant A (4) du véhicule.

15. Système audio selon la revendication 13, dans lequel les parties du châssis support du véhicule comprennent un montant B (6) du véhicule.

16. Système audio selon la revendication 13, dans lequel les parties du châssis support du véhicule comprennent le bas de marche (7) du véhicule.

17. Système audio selon l'une des revendications précédentes, dans lequel la deuxième cavité comprend un volume entouré par des portions de la carrosserie (13) du véhicule.

18. Système audio selon la revendication 17, dans lequel le haut-parleur basse fréquence (8) est installé à l'intérieur des portions de carrosserie (13).

19. Système audio selon l'une des revendications 1 à 17, dans lequel le haut-parleur basse fréquence (8, 16) est disposé dans la portière (1).

20. Système audio selon l'une des revendications précédentes, dans lequel la première et/ou la deuxième cavité est/sont accouplée(s) à d'autres cavités se trouvant à l'extérieur de la portière (1) par d'autres dispositifs de liaison.
